# EUROPEAN PATENT APPLICATION

(11) **EP 1 462 639 A2**
(43) Date of publication of application: **29.09.2004**
(21) Application number: 04006200.2
(22) Date of filing: 16.03.2004
(51) Int. Cl.: F02F 7/00, F02B 75/04, F16H 21/32

(54) **Spring-supported crankshaft coupling structure for use in an engine**

(30) Priority: 26.03.2003 US 457298 P; 06.02.2004 US 772457
(71) Applicant: Meyer, Siegfried, 86732 Oettingen (DE)
(72) Inventor: Meyer, Siegfried, 86732 Oettingen (DE)
(74) Representative: Casalonga, Axel

(57) **Abstract**

A spring-supported coupling device (1) used in an engine and coupled between a piston (A) and a crankshaft (B) is constructed to include, a first connector (11) pivoted to the piston (4), a second connector (12) pivoted to the crankshaft (B), a rod member (13) coupled between the first connector (11) and the second connector (12) and axially movable relative to the first connector (11) and the second connector (12), and a spring member (14) axially compressibly connected between the first connector (11) and the second connector (12) around the rod member (13).

## Description

### BACKGROUND OF THE INVENTION

### 1. Field of the invention

The present invention relates to an internal combustion end and, more specifically, to a coupling structure for use in an engine to connect a crankshaft to a piston and to increase the output torque of the engine.

### 2. Description of the Related Art

In a typical internal combustion engine, of the type found in most vehicles today, a plurality of pistons are respectively movably mounted in a plurality of cylinders formed in an engine block. Each of the pistons has one end connected with a piston rod and the other end coupled to a crankshaft. When spark plugs in the engine block fired to ignite fuel mixture, the pistons are driven downward to turn the crankshaft, which ultimately drives the entire vehicle. At present, in a typical engine, connecting rods are used and connected with the respective first end to the corresponding piston and the respective second end to the corresponding crankshaft. The connecting points between the two ends of each connecting rod and the corresponding piston and corresponding crankshaft are disposed at the ends of the longitudinal center axis of the respective connecting rod. By means of the coupling of the connecting rod between the corresponding piston and the corresponding crankshaft, reciprocating motion of the piston causes the corresponding crankshaft to rotate.

Presently, researchers have reported many studies to enhance the output torque by extending the moving distance of the connecting rods between the pistons and the crankshafts.

### SUMMARY OF THE INVENTION

The present invention has been accomplished under the circumstances in view. It is one object of the present invention to provide a spring-supported coupling structure for use in an engine to connect a crankshaft to a piston, which greatly enhances the output torque of the engine.

It is another object of the present invention to provide a spring-supported coupling structure for use in an engine to connect a crankshaft to a piston, which saves fuel consumption of the engine.

It is still another object of the present invention to provide a spring-supported coupling structure for use in an engine to connect a crankshaft to a piston, which improves the performance of the engine, resulting in reduced amount of solid matter in exhaust gas of the engine.

To achieve these and other objects of the present invention, the spring-supported coupling device is installed in an engine and coupled between a piston and a crankshaft, comprising a first connector pivoted to the piston, a second connector pivoted to the crankshaft, a rod member coupled between the first connector and the second connector and axially movable relative to the first connector and the second connector, and a spring member axially compressibly connected between the first connector and the second connector around the rod member.

### BRIEF DESCRIPTION OF THE DRAWINGS

The accompanying drawing is included to provide a further understanding of the invention, and is incorporated in and constitutes a part of this specification. The drawing illustrates an embodiment of the invention and, together with the description, serves to explain the principles of the invention. In the drawing,
FIG. 1 is a sectional view showing spring-supported coupling structure coupled between a piston and a crankshaft according to the present invention.
FIG. 2 is an enlarged view of a part of FIG. 1.
FIG. 3 is a sectional front plain view of the present invention.
FIGS. 4A~4D are schematic drawing showing one moving cycle of the spring-supported coupling structure with the piston from the top dead center to the bottom dead center and then from the bottom dead center back to the top dead center according to the present invention.

### DETAILED DESCRIPTION OF ILLUSTRATIVE EMBODIMENT

Reference will now be made in detail to the illustrative embodiment of the present invention, examples of which are illustrated in the accompanying drawings. Wherever possible, the same reference numbers are used in the drawings and the description to refer to the same or like parts.

Referring to FIGS. from 1 through 3, a spring-supported coupling structure **1** is shown comprised of a first connector **11**, a second connector **12**, a rod member **13**, a spring member **14**, and two fastening devices **15** and **15'**.

The first connector **11** has one end, namely, the top end pivoted to a piston A by a pivot pin **110**, and the other end, namely, the bottom end terminating in a receptacle **111**. The receptacle **111** has a downwardly axially extended receiving hole **1110**.

The second connector **12** has one end, namely, the bottom end pivoted to a crankshaft **B** by a pivot pin **120**, and the other end, namely, the top end terminating in a receptacle **121**. The receptacle **121** has an upwardly axially extended receiving hole **1210**.

The rod member **13** has two ends respectively inserted into the receiving hole **1110** in the receptacle **111** of the first connector **11** and the receiving hole **1210** in the receptacle **121** of the second connector **12**, and can be moved axially relative to the receptacle **111** of the first connector **11** and the receptacle **12** of the second connector **12** within a limited distance.

The spring member **14** is mounted around the rod member **13**, having two distal ends respectively fixedly fastened to the periphery of the receptacle **111** of the first connector **11** and the periphery of the receptacle **121** of the second connector **12**.

The fastening devices **15** and **15'** are respectively fastened to the receptacles **111** and **121** of the connectors **11** to secure the spring member **14** in place.

When the spring member **14** not compressed, the rod member **13** does not touch the inner end of the receiving hole **1110** in the receptacle **111** of the first connector **11** and the inner end of the receiving hole **1210** in the receptacle **121** of the second connector **12**, i.e., the receiving holes **1110** and **1210** of the receptacles **111** and **121** provide a space for enabling the rod member **13** to be moved axially relative the connectors **11** and **12** when the spring member **14** compressed in axial direction.

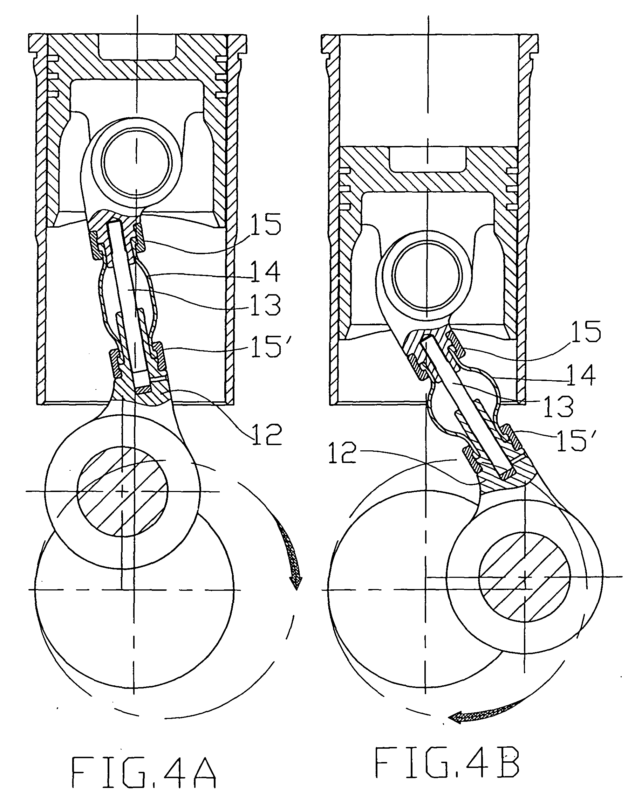

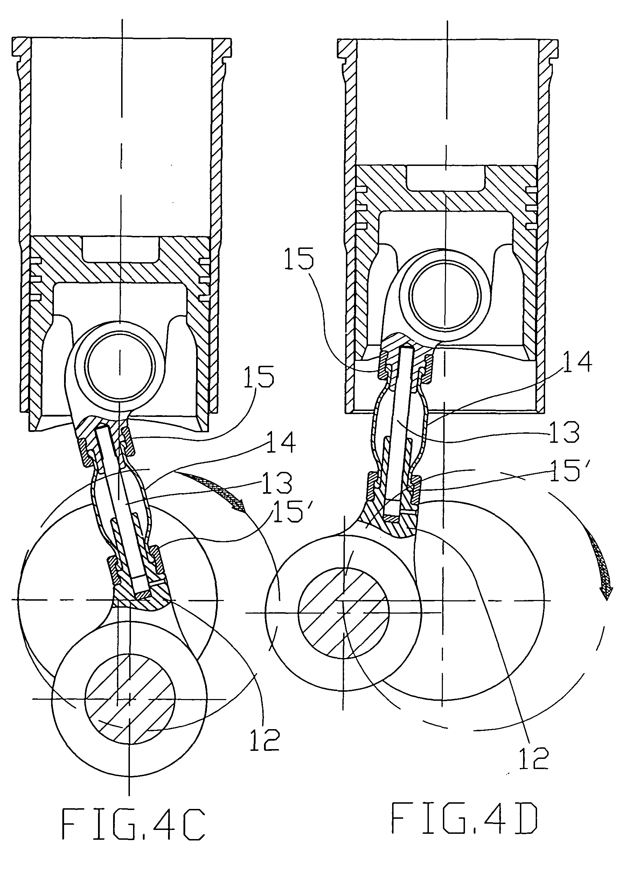

Referring to FIGS. 4A~4D, when the spring-supported coupling structure **1** moved with the piston **A** to the top dead center in the combustion engine, the spring member **14** is released. When the piston **A** moving downwards from the top dead center in the combustion engine toward the bottom dead center, the spring member **14** is compressed, and the rod member **13** has its two ends respectively stopped at the inner end of the receiving hole **1110** in the receptacle **111** of the first connector **11** and the inner end of the receiving hole **1210** in the receptacle **121** of the second connector **12**, imparting a pressure to force the crankshaft **B** to rotate, and therefore the piston **A** is moved with the spring-supported coupling structure **1** rapidly downwardly to the bottom dead center in the combustion engine. When the piston **A** moved with the spring-supported coupling structure **1** to the bottom dead center in the combustion engine, the spring member **14** is released. When the spring member **14** returning to its former shape during reciprocating motion of the piston A, it imparts a pressure to the second connector **12** against the crankshaft **B**, accelerating the rotation of the crankshaft **B**. Therefore, the spring member **14** is alternatively compressed and released during reciprocating motion of the piston **A**, and the reciprocating speed of the piston **A** is accelerated.

As indicated above, the spring-supported coupling structure of the present invention uses a spring member to accelerating the rotary motion of the crankshaft during reciprocating motion of the piston, thereby enhancing the output torque of the engine. Because the invention greatly improves the performance of the engine, the engine can save much fuel and reduces the production of waste gas.

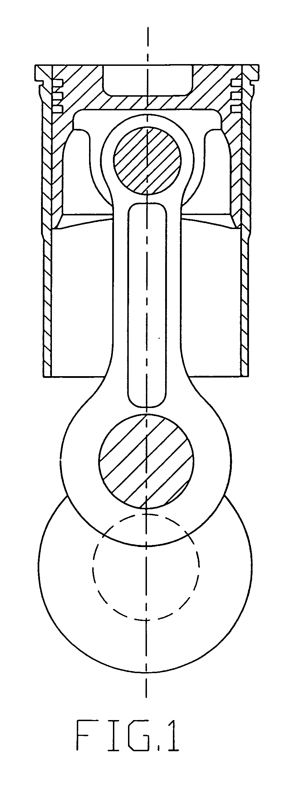

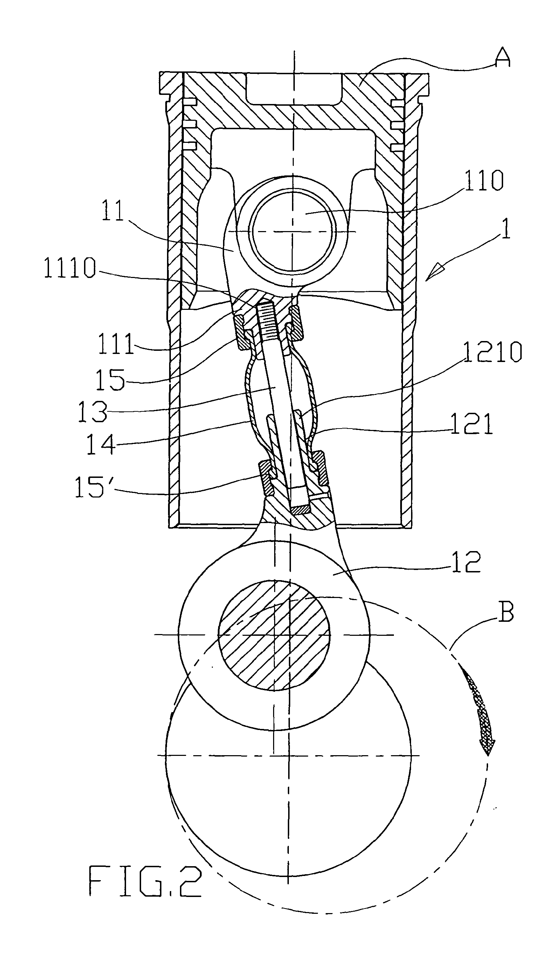

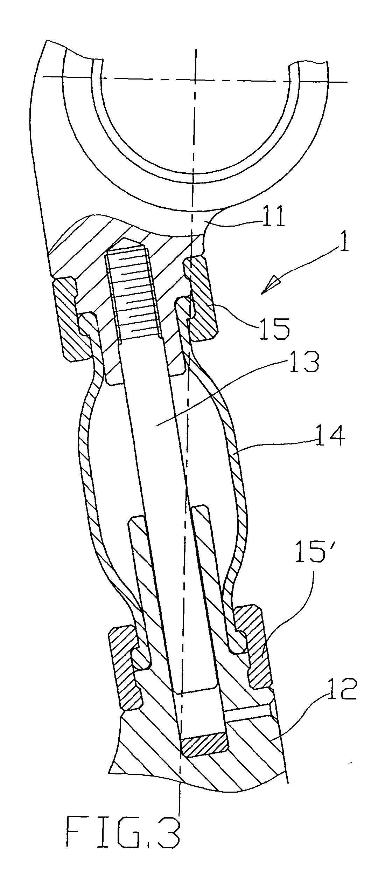

A prototype of spring-supported coupling structure for use in an engine has been constructed with the features of FIGS. 1~4. The spring-supported coupling structure for use in an engine functions smoothly to provide all of the features discussed earlier.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A spring-supported coupling device used in an engine and coupled between a piston and a crankshaft, comprising:
a first connector pivoted to said piston;
a second connector pivoted to said crankshaft;
a rod member coupled between said first connector and said second connector and axially movable relative to said first connector and said second connector; and
a spring member axially compressibly connected between said first connector and said second connector around said rod member.

2. The spring-supported coupling device as claimed in claim 1, wherein said first connector comprises a receptacle at a bottom end thereof, the receptacle of said connector defining a downwardly axially extended receiving hole; said second connector comprises a receptacle at a top end thereof, the receptacle of said connector defining an upwardly axially extended receiving hole; said rod member has two ends respectively inserted into the receiving hole in the receptacle of said first connector and the receiving hole in the receptacle of said second connector.

3. The spring-supported coupling device as claimed in claim 2, further comprising two fastening devices respectively fastened to the periphery of the receptacle of said first connector and the periphery of the receptacle of said second connector to fixedly secure two distal ends of said spring member to said first connector and said second connector respectively.
